# EUROPEAN PATENT APPLICATION

(11) **EP 2 759 435 A1**
(43) Date of publication of application: **30.07.2014**
(21) Application number: 14152701.0
(22) Date of filing: 27.01.2014
(51) Int. Cl.: B60K 6/48, B60K 6/547, B60K 6/387, F16H 63/48, B60W 20/00, F16H 3/00

(54) **Vehicle parking apparatus and method for parking vehicle**

(30) Priority: 28.01.2013 JP 2013013037
(71) Applicant: AISIN SEIKI KABUSHIKI KAISHA, Kariya-shi, Aichi 448-8650 (JP)
(72) Inventor: Mori, Kyosuke, Kariya-shi, Aichi 448-8650 (JP); Iwasaki, Yasuhisa, Kariya-shi, Aichi 448-8650 (JP); Murakami, Yoshihiro, Kariya-shi, Aichi 448-8650 (JP); Misu, Takahiro, Kariya-shi, Aichi 448-8650 (JP)
(74) Representative: Kramer - Barske - Schmidtchen

(57) **Abstract**

A vehicle parking apparatus includes an engine (2), an electric motor (5), a transmission apparatus (4), a parking detection member (18), and a control unit (13). The transmission apparatus (4) includes a first gear train (38) configured to connect between the engine and a driving wheel (7, 8), a second gear train (39) configured to connect between the electric motor and the driving wheel, and a first switching mechanism (35) selectively connecting and disconnecting between a predetermined first rotation element (29) in the first gear train and a predetermined second rotation element (25) in the second gear train. The control unit (13) connects between the engine (2) and the driving wheel (7, 8) by the first gear train (38), disconnects between the electric motor (5) and the driving wheel by the second gear train (39), and disconnects the second gear train from the first gear train by the first switching mechanism (35) in a case where the parking detection member (18) detects the parked state of the vehicle.

## Description

### TECHNICAL FIELD

This disclosure generally relates to a vehicle parking apparatus and a method for parking a vehicle.

### BACKGROUND DISCUSSION

A known drive apparatus for a hybrid vehicle includes an electric motor assisting a driving force of an engine in association with revolutions of the engine and performing regeneration of energy in a state where a rotor of the electric motor is attached to a crankshaft. Such drive apparatus is disclosed on pages 124 and 125 of the first edition of "Vehicle mechanism and construction guide" written by Takeshi Hosokawa, published by Grand Prix Book Publishing Co., Ltd., on January 21, 2008, which will be hereinafter referred to as Reference 1. According to the drive apparatus disclosed in Reference 1, the engine and the electric motor are connected to driving wheels via a manual transmission or a continuously variable transmission. At this time, the electric motor also functions as a flywheel of the engine. Thus, the number of components may be reduced, which leads to the drive apparatus manufactured at a reduced cost and including a reduced size that may achieve an energy saving.

In a case where a vehicle equipped with a manual transmission is parked, the engine is basically stopped and connected to the driving wheels via the transmission. In the aforementioned state, because of the engine serving as a resistance, the driving wheels are inhibited from rolling or rotating even when a rotation force is generated at the driving wheels. Nevertheless, in a case where the vehicle that is parked is brought in specific circumstances, an excess rotation force may be generated at the driving wheels, which may result in rotation of the crankshaft of the engine together with the driving wheels. The specific circumstances include an unintended downward movement of the vehicle when the vehicle is parked on a slope, and a towing of the vehicle while the driving wheels are on the road, for example. As mentioned above, according to the drive apparatus disclosed in Reference 1, the rotor of the electric motor is attached to the crankshaft. Thus, in a case where the driving wheels of the vehicle that is parked rotate, the rotor of the electric motor rotates together with the crankshaft, which generates an inductive current within the electric motor. At this time, because an inverter is not activated, the electric current generated at the electric motor serves as a burden to the inverter.

In a case where the driving wheels and the engine are connected by a continuously variable transmission, a hydraulic system in the transmission is not operated when the vehicle is parked. Therefore, even a parking brake is inhibited from functioning by the connection between the driving wheels and the engine. A mechanical parking structure is necessary other than the engine and the electric motor, which may lead to the increase of size and cost of the vehicle.

A need thus exists for a vehicle parking apparatus and a method for parking a vehicle obtained at a reduced cost and including high reliability.

### SUMMARY

According to an aspect of this disclosure, a vehicle parking apparatus includes an engine, an electric motor, a transmission apparatus configured to change a speed of a rotation power transmitted from the engine and the electric motor to transmit the rotation power to a driving wheel, a parking detection member detecting a parked state of a vehicle, and a control unit connected to the parking detection member and controlling an operation of the transmission apparatus. The transmission apparatus includes a first gear train being switchable among a plurality of gear positions and being configured to connect between the engine and the driving wheel, a second gear train being switchable among a plurality of gear positions and being configured to connect between the electric motor and the driving wheel, and a first switching mechanism selectively connecting and disconnecting between a predetermined first rotation element in the first gear train and a predetermined second rotation element in the second gear train. The control unit connects between the engine and the driving wheel by the first gear train, disconnects between the electric motor and the driving wheel by the second gear train, and disconnects the second gear train from the first gear train by the first switching mechanism in a case where the parking detection member detects the parked state of the vehicle.

In a case where the parking detection member detects the parked state of the vehicle, the control unit controls the first gear train to connect between the engine and the driving wheel. As a result, the engine serves as a resistance to inhibit the vehicle from moving. In addition, the control unit controls the second gear train to disconnect between the electric motor and the driving wheel and controls the first switching mechanism to disconnect the second gear train from the first gear train. Therefore, even in a case where an excessive rotation power is generated at the driving wheel, for example, a rotor of the electric motor is inhibited from rotating. Further, a mechanical parking structure other than the engine and the electric motor is not necessary, which may achieve a vehicle including a small size and manufactured at a reduced cost.

The first gear train includes an input shaft connected to the engine, a first input gear being engageable and disengageable relative to the input shaft, the first input gear integrally rotating with the input shaft in a state to engage with the input shaft, an output gear being engageable and disengageable relative to the input shaft, the output gear integrally rotating with the input shaft and configured to be connected to the driving wheel in a state to engage with the input shaft, a deceleration shaft at which a second input gear meshed with the first input gear and a third input gear arranged coaxially to the second input gear and meshed with the output gear are arranged, the number of gear teeth formed at an outer peripheral surface of the first input gear being smaller than the number of gear teeth formed at an outer peripheral surface of the second input gear or the number of gear teeth formed at an outer peripheral surface of the third input gear being smaller than the number of gear teeth formed at an outer peripheral surface of the output gear, and a second switching mechanism controlled by the control unit and configured to selectively engage one of the output gear and the first input gear with the input shaft. The control unit controls the second switching mechanism to engage the first input gear with the input shaft in a case where the parking detection member detects the parked state of the vehicle.

In a case where the parking detection member detects the parked state of the vehicle, the control unit controls the first input gear to engage with the input shaft to connect between the engine and the driving wheel via a deceleration mechanism formed by the first input gear and the second input gear or by the third input gear and the output gear. As a result, the vehicle parking apparatus that inhibits the vehicle from moving even in a case where a rotation power is generated at the driving wheel, for example, may be provided.

The vehicle parking apparatus further includes a clutch apparatus provided between the engine and the transmission apparatus to receive an operation force by the control unit, the clutch apparatus selectively connecting and disconnecting between the engine and the transmission apparatus, the clutch apparatus connecting between the engine and the transmission apparatus in a case where the clutch apparatus is inhibited from receiving the operation force.

The clutch apparatus selectively connecting and disconnecting between the engine and the transmission apparatus is formed by a so-called normally closed clutch that connects between the engine and the transmission apparatus in a case where the clutch apparatus is inhibited from receiving the operation force, i.e., the operation force is released. Accordingly, a specific structure for holding the operation force applied to the clutch apparatus is not necessary in the parked state of the vehicle, which may lead to the clutch apparatus including a small size and manufactured at a reduced cost.

The parking detection member is a start switch of the vehicle, and the parked state of the vehicle is detected in a case where the start switch is turned off.

Accordingly, a specific device is not necessary for detecting whether or not a vehicle driver intends to park the vehicle, which may lead to the vehicle parking apparatus including a small size and manufactured at a reduced cost.

According to another aspect of this disclosure, a method for parking a vehicle, the vehicle including an engine, an electric motor, a transmission apparatus configured to change a speed of a rotation power transmitted from the engine and the electric motor to transmit the rotation power to a driving wheel, the transmission apparatus including a first gear train being switchable among a plurality of gear positions and being configured to connect between the engine and the driving wheel, a second gear train being switchable among a plurality of gear positions and being configured to connect between the electric motor and the driving wheel, and a first switching mechanism selectively connecting and disconnecting between a predetermined first rotation element in the first gear train and a predetermined second rotation element in the second gear train, the method including connecting between the engine and the driving wheel by the first gear train, disconnecting between the electric motor and the driving wheel by the second gear train, and disconnecting the second gear train from the first gear train by the first switching mechanism.

Accordingly, even in a case where an excessive rotation power is generated at the driving wheel, for example, the rotor of the electric motor is inhibited from rotating. Further, a mechanical parking structure other than the engine and the electric motor is not necessary, which may achieve the method for parking the vehicle at a reduced cost.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a block diagram schematically illustrating a configuration of a drive system of a vehicle including a vehicle parking apparatus according to a first embodiment disclosed here;
Fig. 2 is a block diagram schematically illustrating gear trains in a transmission of the vehicle parking apparatus illustrated in Fig. 1;
Fig. 3 is a skeleton diagram schematically illustrating a configuration of a power transmission passage of the transmission illustrated in Fig. 2;
Fig. 4 is a table illustrating operation modes of the transmission illustrated in Fig. 3;
Fig. 5 is a skeleton diagram illustrating the power transmission passage in a neutral mode of the transmission;
Fig. 6 is a skeleton diagram illustrating the power transmission passage in a first speed HV drive mode of the transmission;
Fig. 7 is a skeleton diagram illustrating the power transmission passage in a second speed HV drive mode of the transmission;
Fig. 8 is a skeleton diagram illustrating the power transmission passage in a gear parking mode of the transmission;
Fig. 9 is a flowchart illustrating a method for controlling a clutch and the transmission by a transmission control unit in a shifting from the neutral mode to the gear parking mode;
Fig. 10 is a flowchart illustrating the method for controlling the clutch and the transmission by the transmission control unit in the shifting from the first speed HV drive mode to the gear parking mode;
Fig. 11 is a flowchart illustrating the method for controlling the clutch and the transmission by the transmission control unit in the shifting from the second speed HV drive mode to the gear parking mode;
Fig. 12 is a skeleton diagram schematically illustrating the configuration of the power transmission passage of the transmission according to a second embodiment disclosed here;
Fig. 13 is a table illustrating a portion of the operation modes of the transmission illustrated in Fig. 12; and
Fig. 14 is a skeleton diagram illustrating the power transmission passage in the gear parking mode of the transmission illustrated in Fig. 12.

### DETAILED DESCRIPTION

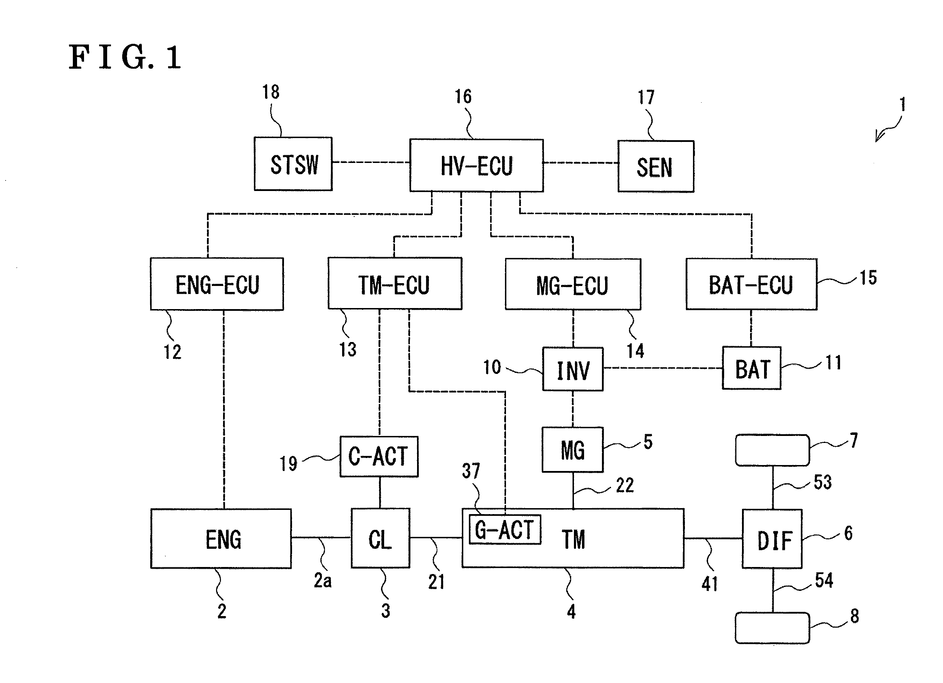

A first embodiment will be explained with reference to Figs. 1 to 11. A drive system 1 for a vehicle illustrated in Fig. 1 is applied to a hybrid vehicle including an engine 2 serving as a power source and outputting a rotation power by combustion energy of fuel, and a motor generator 5 serving as an electric motor and outputting a rotation power by electric energy. The drive system 1 includes a clutch 3 serving as a clutch apparatus, a transmission 4 serving as a transmission apparatus, the motor generator 5, and a differential apparatus 6 at a power transmission passage between the engine 2 and wheels 7 and 8 serving as a driving wheel. In Fig. 1, each continuous straight line connecting between components indicates a mechanical connection while each broken straight line connecting between components indicates an electrical connection.

The drive system 1 further includes, as a control system of the engine 2, the clutch 3, the transmission 4 and the motor generator 5, an inverter 10, a battery 11, an engine control unit 12, a transmission control unit 13 serving as a control unit, a motor generator control unit 14, a battery control unit 15, a hybrid control unit 16, sensors 17, a vehicle start switch 18 serving as a parking detection member and a start switch of a vehicle, and a clutch actuator 19. The sensors 17 include, for example, an engine rotation sensor, a vehicle speed sensor, an accelerator opening sensor, a hydraulic sensor of the clutch actuator 19, switching position sensors of first to fourth switching mechanisms 35, 36, 46, and 47 constituting a portion of the transmission 4. A gear shift actuator 37 is provided at the transmission 4 so as to operate the switching mechanisms 35, 36, 46, and 47.

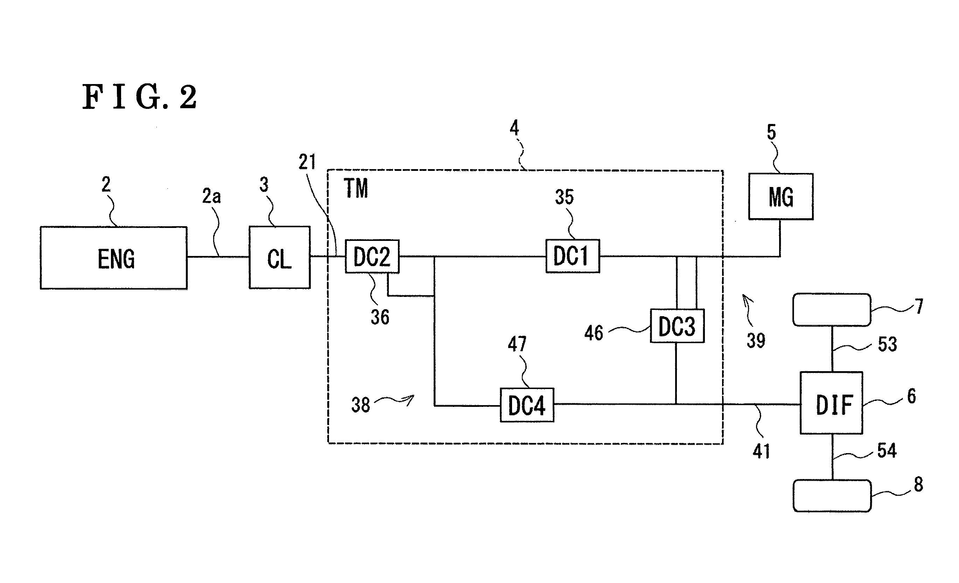

As illustrated in Figs. 1 and 2, the engine 2 serves as an internal combustion engine, for example, outputting the rotation power from a crankshaft 2a by combustion of fuel, for example, hydrocarbonaceous fuel corresponding to gasoline and light oil. The rotation power of the crankshaft 2a is transmitted to an input-side member of the clutch 3. The engine 2 includes various sensors and actuators driving an injector and a throttle valve, for example. The engine 2 is connected to the engine control unit 12 to be communicable therewith and is controlled by the engine control unit 12.

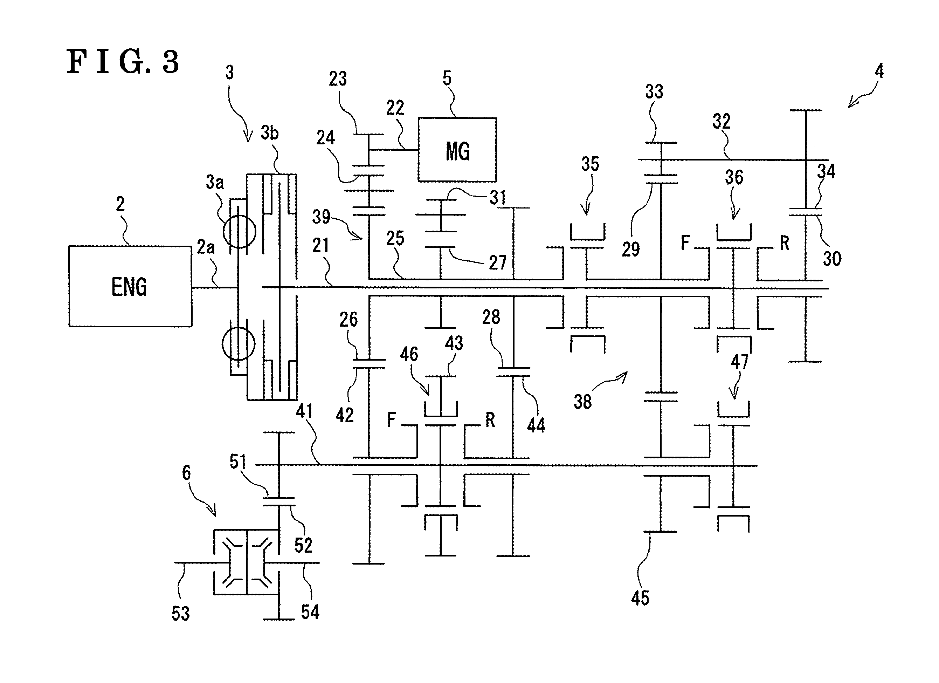

The clutch 3 is arranged at the power transmission passage between the engine 2 and the transmission 4 and is configured to selectively permit and prohibit the transmission of the rotation power from the engine 2 to the transmission 4. The clutch 3 includes a damper portion 3a and a clutch portion 3b at the power transmission passage between the crankshaft 2a and an input shaft 21 as illustrated in Fig. 3. The damper portion 3a absorbs, by an elastic force, a fluctuation torque generated between the input-side member that integrally rotates with the crankshaft 2a and an intermediate member connected to an input side of the clutch portion 3b. The clutch portion 3b transmits the rotation power from the intermediate member connected to an output side of the damper portion 3a to the input shaft 21 by engagement between the intermediate member and an output-side member that integrally rotates with the input shaft 21 of the transmission 4. Engagement and disengagement operations of the clutch 3 are performed by the clutch actuator 19 that is driven and controlled by the transmission control unit 13. That is, the clutch 3 receives an operation force by the transmission control unit 13. The clutch actuator 19 generates and applies an oil pressure to the clutch 3 so as to bring the clutch 3 to the disengagement state. The clutch 3 is formed by a normally closed clutch so that the intermediate member and the output-side member engage with each other by a biasing force of a biasing member provided at the clutch 3 in a case where the application of oil pressure by the clutch actuator 19 is stopped. That is, the clutch 3 connects between the engine 2 and the transmission 4 in a case where the clutch 3 is inhibited from receiving the operation force.

The transmission 4 serves as an automatically controlled manual transmission for a vehicle including predetermined gear positions and a fork shaft that is operated by the gear shift actuator 37. The transmission 4 is formed by a gear mechanism that changes the speed of rotation power (i.e., speed of rotation) transmitted from either one of or both of the engine 2 and the motor generator 5 so as to output the resulting rotation power to the differential apparatus 6. The transmission control unit 13 is connected to the transmission 4 and to the vehicle start switch 18 via the hybrid control unit 16. Thus, the transmission control unit 13 controls the operation of the transmission 4 based on the operation of the vehicle start switch 18, the rotation condition of each of the engine 2 and the motor generator 5, the vehicle speed, and a shift lever position, for example.

As illustrated in Figs. 2 and 3, the transmission 4 includes an engine drive gear train 38 serving as a first gear train, an electric vehicle (EV) drive gear train 39 serving as a second gear train, and the first switching mechanism 35. The engine drive gear train 38 is operated by the gear shift actuator 37 to be switchable among plural gear positions and is configured to change the speed of rotation power transmitted from the engine 2 so as to transmit the resulting rotation power to the wheels 7 and 8. The EV drive gear train 39 is operated by the gear shift actuator 37 to be switchable among plural gear positions and is configured to change the speed of rotation power transmitted from the motor generator 5 so as to transmit the resulting rotation power to the wheels 7 and 8. The first switching mechanism 35 is operated by the gear shift actuator 37 to selectively connect and disconnect between a predetermined first rotation element in the engine drive gear train 38, i.e., a fourth driving gear 29, and a predetermined second rotation element in the EV drive gear train 39, i.e., a shaft 25.

The engine drive gear train 38 includes the input shaft 21, the fourth driving gear 29, a fifth driving gear 30, a shaft 32, first and second idler gears 33, 34, the second switching mechanism 36, a fourth driven gear 45, and the fourth switching mechanism 47. The EV drive gear train 39 includes an input shaft 22, an input driving gear 23, an input idler gear 24, the shaft 25, a first driving gear 26, a third driving gear 28, a first driven gear 42, a third driven gear 44, and the third switching mechanism 46. The second switching mechanism 36 and the fourth switching mechanism 47 provided at the engine drive gear train 38 are operated to selectively connect and disconnect between the engine 2 and the wheels 7 and 8. In addition, the third switching mechanism 46 provided at the EV drive gear train 39 is operated to selectively connect and disconnect between the motor generator 5 and the wheels 7 and 8.

The construction of the transmission 4 will be explained in detail with reference to Fig. 3. The transmission 4 includes three parallel shafts, i.e., the input shaft 21, an output shaft 41 arranged substantially parallel to the input shaft 21, and the shaft 32 arranged substantially parallel to the input shaft 21. The shaft 32 is provided for the first and second idler gears 33 and 34. The transmission 4 serves as a five speed ratio transmission including three parallel shafts to provide five forward speeds. In addition, the transmission 4 includes, at the power transmission passage between the input shaft 21 and the output shaft 41, the input shaft 21, the input shaft 22, the input driving gear 23, the input idler gear 24, the shaft 25, the first driving gear 26, a second driving gear 27, the third driving gear 28, the fourth driving gear 29 serving as an output gear, the fifth driving gear 30 serving as a first input gear, a reverse idler gear 31, the shaft 32 serving as a deceleration shaft, the first idler gear 33 serving as a third input gear, the second idler gear 34 serving as a second input gear, the first switching mechanism 35, the second switching mechanism 36, the output shaft 41, the first driven gear 42, a second driven gear 43, the third driven gear 44, the fourth driven gear 45, the third switching mechanism 46, and the fourth switching mechanism 47.

The input shaft 21 is connected to the engine 2 via the clutch 3 to receive the rotation power from the engine 2. The input shaft 21 integrally rotates with the output-side member of the clutch 3. The first driving gear 26, the second driving gear 27, the third driving gear 28, the first switching mechanism 35, the fourth driving gear 29, the second switching mechanism 36, and the fifth driving gear 30 are arranged at the outer periphery of the input shaft 21 in the mentioned order from the side at which the clutch 3 is provided. The input shaft 21 is rotatably supported at a housing of the transmission 4. The input shaft 21 supports the shaft 25 to be rotatable in idle manner, the shaft 25 being in an annular form and integrally rotatable with the first driving gear 26, the second driving gear 27, and the third driving gear 28. The input shaft 21 supports the fourth driving gear 29 to be rotatable in idle manner and supports the fifth driving gear 30 to be rotatable in idle manner. The input shaft 21 is configured to select the fourth driving gear 29 or the fifth driving gear 30 to be connected thereto by the second switching mechanism 36 provided between the fourth driving gear 29 and the fifth driving gear 30.

The input shaft 22 receives the rotation power from the motor generator 5. The input shaft 22 is rotataby supported at the housing of the transmission 4. The input shaft 22 integrally rotates with the input driving gear 23. The input shaft 22 serves as a component of the EV drive gear train 39 receiving the rotation power from the motor generator 5.

The input driving gear 23 drives to rotate the input idler gear 24 by receiving the rotation power from the motor generator 5. The input driving gear 23 integrally rotates with the input shaft 22. The input driving gear 23 is meshed with the input idler gear 24. The input driving gear 23 serves as a component of the EV drive gear train 39.

The input idler gear 24 drives to rotate the first driving gear 26 by receiving the rotation power from the input driving gear 23. The input idler gear 24 is rotatably supported at the housing of the transmission 4. The input idler gear 24 is meshed with the input driving gear 23 and the first driving gear 26. The input idler gear 24 serves as a component of the EV drive gear train 39.

The first driving gear 26, the second driving gear 27, and the third driving gear 28 are arranged at the outer periphery of the shaft 25 in the mentioned order from the side at which the clutch 3 is provided. The shaft 25 integrally rotates with the first driving gear 26, the second driving gear 27, and the third driving gear 28. The shaft 25 is configured to be connected to the fourth driving gear 29 by the first switching mechanism 35 arranged between the third driving gear 28 and the fourth driving gear 29. The shaft 25 serves as a component of the EV drive gear train 39.

The first driving gear 26 drives the first driven gear 42. The first driving gear 26 is meshed with the input idler gear 24 and the first driven gear 42. The diameter of the first driving gear 26 is smaller than the diameter of the third driving gear 28. The first driving gear 26 serves as a component of the EV drive gear train 39.

The second driving gear 27 drives the second driven gear 43 via the reverse idler gear 31 in a case where the second driving gear 27 is meshed with the reverse idler gear 31. The second driving gear 27 is meshed with the reverse idler gear 31 in a case where the vehicle is reversed and is inhibited from being meshed with the reverse idler gear 31 in a case other than the case where the vehicle is reversed. The second driving gear 27 is supported by the input shaft 21 to be rotatable in idle manner via the shaft 25.

The reverse idler gear 31 receives the rotation power from the second driving gear 27 to drive the second driven gear 43 in a case where the reverse idler gear 31 is meshed with the second driving gear 27 and the second driven gear 43. The reverse idler gear 31, which is axially movable, is meshed with both the second driving gear 27 and the second driven gear 43 in a case where the vehicle is reversed and is inhibited from being meshed with the second driving gear 27 and the second driven gear 43 so that the reverse idler gear 31 rotates in idle manner in a case other than the case where the vehicle is reversed. The reverse idler gear 31 is rotatably supported at the housing of the transmission 4. The axial movement of the reverse idler gear 31 is performed by the gear shift actuator 37. The gear shift actuator 37 is controlled by the transmission control unit 13.

The third driving gear 28 drives the third driven gear 44. The third driving gear 28 is meshed with the third driven gear 44. The diameter of the third driving gear 28 is greater than the diameter of the first driving gear 26. The third driving gear 28 serves as a component of the EV drive gear train 39.

The fourth driving gear 29 drives the fourth driven gear 45. The fourth driving gear 29 is configured to be connected to the shaft 25 by the first switching mechanism 35. The fourth driving gear 29 is configured to be connected to the input shaft 21 by the second switching mechanism 36. The fourth driving gear 29 is meshed with the first idler gear 33 and the fourth driven gear 45. The diameter of the fourth driving gear 29 is greater than the diameter of the fifth driving gear 30. The fourth driving gear 29 serves as a component of the engine drive gear train 38.

The fifth driving gear 30 drives the second idler gear 34. The fifth driving gear 30 is supported by the input shaft 21 to be rotatable in idle manner. The fifth driving gear 30 is configured to be connected to the input shaft 21 by the second switching mechanism 36. The fifth driving gear 30 is meshed with the second idler gear 34. The diameter of the fifth driving gear 30 is smaller the diameter of the fourth driving gear 29. The fifth driving gear 30 serves as a component of the engine drive gear train 38.

The shaft 32 is arranged substantially parallel to the input shaft 21 at an axial position at which the fourth driving gear 29 and the fifth driving gear 30 are arranged. The shaft 32 is rotatably supported at the housing of the transmission 4. The first idler gear 33 and the second idler gear 34 are arranged to be coaxial at the outer periphery of the shaft 32 in the mentioned order from the side at which the clutch 3 is provided. The shaft 32 serves as a component of the engine drive gear train 38.

The first idler gear 33 drives the fourth driving gear 29. The first idler gear 33 is rotatably supported at the housing of the transmission 4 via the shaft 32. The first idler gear 33 is meshed with the fourth driving gear 29. The outer diameter of the first idler gear 33 is smaller than the outer diameter of the second idler gear 34. In addition, the outer diameter of the first idler gear 33 is smaller than the outer diameter of the fourth driving gear 29. The number of gear teeth formed at the outer periphery of the first idler gear 33 is smaller the number of gear teeth formed at the outer periphery of the fourth driving gear 29 so that a deceleration mechanism is formed between the first idler gear 33 and the fourth driving gear 29. The first idler gear 33 serves as a component of the engine drive gear train 38.

The second idler gear 34 receives a driving force (rotation power) from the fifth driving gear 30. The second idler gear 34 is rotatably supported at the housing of the transmission 4 via the shaft 32. The second idler gear 34 is meshed with the fifth driving gear 30. The diameter of the second idler gear 34 is greater than the diameter of the first idler gear 33. The second idler gear 34 serves as a component of the engine drive gear train 38.

The first switching mechanism 35 performs a switching operation, i.e., selectively connects and disconnects the fourth driving gear 29 relative to the shaft 25 that integrally rotates with the first driving gear 26, the second driving gear 27, and the third driving gear 28. The first switching mechanism 35 is configured to disconnect between the EV drive gear train 39 and the engine drive gear train 38. The first switching mechanism 35 is arranged between the third driving gear 28 and the fourth driving gear 29

The first switching mechanism 35 includes a sleeve that is spline-connected to the fourth driving gear 29. The first switching mechanism 35 is configured to connect the fourth driving gear 29 to the shaft 25 by a spline connection of the sleeve to the shaft 25 so that the fourth driving gear 29 integrally rotates with the shaft 25. In addition, the first switching mechanism 35 is configured to disconnect the fourth driving gear 29 from the shaft 25, i.e., to release the connection between the fourth driving gear 29 and the shaft 25 by releasing the slpline connection of the sleeve to the shaft 25, so that the fourth driving gear 29 is rotatable relative to the shaft 25. The sleeve is connected to a fork shaft via a fork in the first switching mechanism 35. The switching operation of the first switching mechanism 35 is achieved by the movement of the fork shaft by the gear shift actuator 37.

The second switching mechanism 36 performs a switching operation, i.e., selectively connects and disconnects either the fourth driving gear 29 or the fifth driving gear 30 relative to the input shaft 21 by selecting either the fourth driving gear 29 or the fifth driving gear 30. The second switching mechanism 36 is arranged between the fourth driving gear 29 and the fifth driving gear 30. The second switching mechanism 36 includes a sleeve that is spline-connected to the input shaft 21. The second switching mechanism 36 connects between the input shaft 21 and the fourth driving gear 29 by the movement of the sleeve in a direction F (position F) in Fig. 3 so that the sleeve is spline-connected to the fourth driving gear 29. As a result, the fourth driving gear 29 is connected to the input shaft 21 to integrally rotate with the input shaft 21. In addition, the second switching mechanism 36 connects between the input shaft 21 and the fifth driving gear 30 by the movement of the sleeve in a direction R (position R) in Fig. 3 so that the sleeve is spline-connected to the fifth driving gear 30. As a result, the fifth driving gear 30 is connected to the input shaft 21 to integrally rotate with the input shaft 21. The sleeve is connected to a fork shaft via a fork in the second switching mechanism 36. The switching operation of the second switching mechanism 36 is achieved by the movement of the fork shaft by the gear shift actuator 37.

The output shaft 41 outputs the rotation power, of which the rotation speed is changed at the transmission 4 after the rotation power is input to the transmission 4, to the differential apparatus 6. The first driven gear 42, the third switching mechanism 46 including the second driven gear 43, the third driven gear 44, the fourth driven gear 45, and the fourth switching mechanism 47 are arranged at the outer periphery of the output shaft 41 in the mentioned order from the side at which the engine 2 is provided, i.e., from the left side in Fig. 3. The output shaft 41 is rotatably supported at the housing of the transmission 4. The output shaft 41 supports the first driven gear 42 to be rotatable in idle manner. The output shaft 41 is configured to be connected to either the first driven gear 42 or the third driven gear 44 by the third switching mechanism 46 that is arranged between the first driven gear 42 and the third driven gear 44 to select either the first driven gear 42 or the third driven gear 44. The output shaft 41 that is spline-connected to a sleeve of the third switching mechanism 46 integrally rotates with the second driven gear 43 that is attached to the sleeve. The output shaft 41 supports the third driven gear 44 to be rotatable in idle manner. The output shaft 41 also supports the fourth driven gear 45 to be rotatable in idle manner. The output shaft 41 is configured to be connected to the fourth driven gear 45 by the fourth switching mechanism 47. An output driving gear 51 of the differential apparatus 6 is attached to a portion of the output shaft 41 closer to the engine 2 relative to the first driven gear 42. At this time, however, the output driving gear 51 may be provided at a portion of the output shaft 41 opposite from the engine 2 relative to the fourth switching mechanism 47, i.e., provided to the right side in Fig. 3.

The first driven gear 42 is driven by the first driving gear 26. The first driven gear 42 is configured to be connected to the output shaft 41 by the third switching mechanism 46. The first driven gear 42 is meshed with the first driving gear 26. The diameter of the first driven gear 42 is greater than the diameter of the third driven gear 44. The first driven gear 42 serves as a component of the EV drive gear train 39.

The second driven gear 43 is driven by the second driving gear 27 via the reverse idler gear 31 in a state to be meshed with the reverse idler gear 31. The second driven gear 43 is meshed with the reverse idler gear 31 in a case where the vehicle is reversed and is inhibited from being meshed with the reverse idler gear 31 in a case other then the case where the vehicle is reversed. The second driven gear 43 is mounted to the sleeve that is spline-connected to the output shaft 41 in the third switching mechanism 46 so as to integrally rotate with the sleeve and the output shaft 41.

The third driven gear 44 is driven by the third driving gear 28. The third driven gear 44 is supported by the output shaft 41 to be rotatable in idle manner. The third driven gear 44 is configured to be connected to the output shaft 41 by the third switching mechanism 46. The third driven gear 44 is meshed with the third driving gear 28. The diameter of the third driven gear 44 is smaller than the diameter of the first driven gear 42. The third driven gear 44 serves as a component of the EV drive gear train 39.

The fourth driven gear 45 is driven by the fourth driving gear 29. The fourth driven gear 45 is supported by the output shaft 41 to be rotatable in idle manner. The fourth driven gear 45 is configured to be connected to the output shaft 41 by the fourth switching mechanism 47. The fourth driven gear 45 is meshed with the fourth driving gear 29. The fourth driven gear 45 serves as a component of the EV drive gear train 39.

The third switching mechanism 46 performs a switching operation, i.e., selectively connects and disconnects either the first driven gear 42 or the third driven gear 44 relative to the output shaft 41. The third switching mechanism 46 is arranged between the first driven gear 42 and the third driven gear 44. The third switching mechanism 46 connects between the output shaft 41 and the first driven gear 42 by the movement of the sleeve that is spline-connected to the output shaft 41 in a direction F (position F) in Fig. 3 so that the sleeve is spline-connected to the first driven gear 42. As a result, the first driven gear 42 is connected to the output shaft 41 to integrally rotate therewith.

In addition, the third switching mechanism 46 connects between the output shaft 41 and the third driven gear 44 by the movement of the sleeve that is spline-connected to the output shaft 41 in a direction R (position R) in Fig. 3 so that the sleeve is spline-connected to the third driven gear 44. As a result, the third driven gear 44 is connected to the output shaft 41 to integrally rotate therewith. The second driven gear 43 is mounted to the sleeve of the third switching mechanism 46 to integrally rotate therewith. The sleeve is connected to a fork shaft via a fork in the third switching mechanism 46. The switching operation of the third switching mechanism 46 is achieved by the movement of the fork shaft by the gear shift actuator 37.

The fourth switching mechanism 47 performs a switching operation, i.e., selectively connects and disconnects the fourth driven gear 45 relative to the output shaft 41. The fourth switching mechanism 47 includes a sleeve that is spline-connected to the output shaft 41. The fourth switching mechanism 47 is configured to connect the fourth driven gear 45 to the output shaft 41 by a spline connection of the sleeve to the fourth driven gear 45 so that the fourth driven gear 45 integrally rotates with the output shaft 41. In addition, the fourth switching mechanism 47 is configured to disconnect the fourth driven gear 45 from the output shaft 41, i.e., to release the connection between the fourth driven gear 45 and the output shaft 41 by releasing the spline connection of the sleeve to the fourth driven gear 45, so that the fourth driven gear 45 is rotatable relative to the output shaft 41. The sleeve is connected to a fork shaft via a fork in the fourth switching mechanism 47. The switching operation of the fourth switching mechanism 47 is achieved by the movement of the fork shaft by the gear shift actuator 37.

The differential apparatus 6 is configured to transmit the rotation power input from the output shaft 41 of the transmission 4 to shafts 53 and 54 in a differential manner. The differential apparatus 6 includes the output driving gear 51 integrally rotating with the output shaft 41 of the transmission 4. The differential apparatus 6 also includes a ring gear 52 meshed with the output driving gear 51. The differential apparatus 6 divides, in a differentiated manner, the rotation power input from the ring gear 52 to be transmitted to the shafts 53 and 54. The shaft 53 integrally rotates with the wheel 7 while the shaft 54 integrally rotates with the wheel 8.

Next, the control system in the drive system 1 for the engine 2, the clutch 3, the transmission 4, and the motor generator 5 will be explained in detail with reference to Fig. 1. The motor generator 5 serves as a synchronous electric generator driven as an electric motor and an electric generator. The inverter 10 controls operations of the motor generator 5, specifically, a driving operation, a power generating operation and a regenerating operation, in response to a control signal from the motor generator control unit 14. The inverter 10 is electrically connected to the battery 11 via a boost converter. The battery 11 serves as a secondary battery that is rechargeable. The battery 11 is electrically connected to the motor generator 5 via the boost converter and the inverter 10.

The motor generator 5 transmits and receives the electric power relative to the battery 11 via the inverter 10. An output shaft of the motor generator 5 is connected to the input shaft 22 so as to integrally rotate with the input shaft 22. The motor generator 5 charges the battery 11 by power generation using the rotation power transmitted from the engine 2 via the transmission 4, charges the battery 11 by regeneration using the rotation power from the wheels 7 and 8 via the shafts 53, 54, the differential apparatus 6 and the transmission 4, and outputs the rotation power using the electric power from the battery 11. The motor generator 5 incorporates various sensors, for example, an angle sensor for detecting a rotation angle of the output shaft and a rotation sensor. The sensors are connected to the motor generator control unit 14 to be communicable therewith.

The motor generator control unit 14 is a computer, specifically, an electronic control unit, controlling the operation of the motor generator 5 via the inverter 10. The motor generator control unit 14 is connected to the inverter 10, the sensors including the angle sensor, for example, and the hybrid control unit 16 to be communicable. The motor generator control unit 14 performs a control operation based on a predetermined program including a database and a map, for example, in response to a control signal from the hybrid control unit 16.

The engine control unit 12 is a computer, specifically, an electronic control unit, controlling the operation of the engine 2. The engine control unit 12 is connected to the various actuators and sensors incorporated in the engine 2 and the hybrid control unit 16 to be communicable. The engine control unit 12 performs a control operation based on a predetermined program including a database and a map, for example, in response to a control signal from the hybrid control unit 16.

The transmission control unit 13 is a computer, specifically, an electronic control unit, controlling the operations of the clutch 3 and the transmission 4 including the switching mechanisms 35, 36, 46, 47, and the reverse idler gear 31. The transmission control unit 13 is connected to the gear shift actuator 37, the engine rotation sensor, the vehicle speed sensor, the hydraulic sensor of the clutch actuator 19, the switching position sensors of the switching mechanisms 35, 36, 46, 47, and the hybrid control unit 16 to be communicable. The transmission control unit 13 performs a control operation based on a predetermined program including a database and a map, for example, in response to a control signal from the hybrid control unit 16.

The battery control unit 15 is a computer, specifically, an electronic control unit, controlling charge and discharge state of the battery 11. The battery control unit 15 is connected to the hybrid control unit 16 to be communicable. The battery control unit 15 performs a control operation based on a predetermined program including a database and a map, for example, in response to a control signal from the hybrid control unit 16.

The hybrid control unit 16 is a computer, specifically, an electronic control unit, controlling the operations of the engine control unit 12, the transmission control unit 13, the motor generator control unit 14, and the battery control unit 15. The hybrid control unit 16 is connected to the sensors 17 including the vehicle speed sensor and the accelerator opening sensor, for example, the engine control unit 12, the transmission control unit 13, the motor generator control unit 14, and the battery control unit 15 to be communicable. The hybrid control unit 16 outputs control signals to the engine control unit 12, the transmission control unit 13, the motor generator control unit 14, and the battery control unit 15 based on a predetermined program including a database and a map, for example, depending on predetermined circumstances of the vehicle. The hybrid control unit 16 controls start and stop of the engine 2 via the engine control unit 12, controls the operation of the clutch 3, the switching operations of the switching mechanisms 35, 36, 46, 47, and the movement of the reverse idler gear 31 via the transmission control unit 13, controls the driving, power generation, and regeneration of the motor generator 5 via the motor generator control unit 14, and controls a discharge level of the battery 11 via the battery control unit 15. The engine 2, the clutch 3, the transmission 4, the motor generator 5, the transmission control unit 13, and the vehicle start switch 18 constitute a vehicle parking apparatus according to the embodiment.

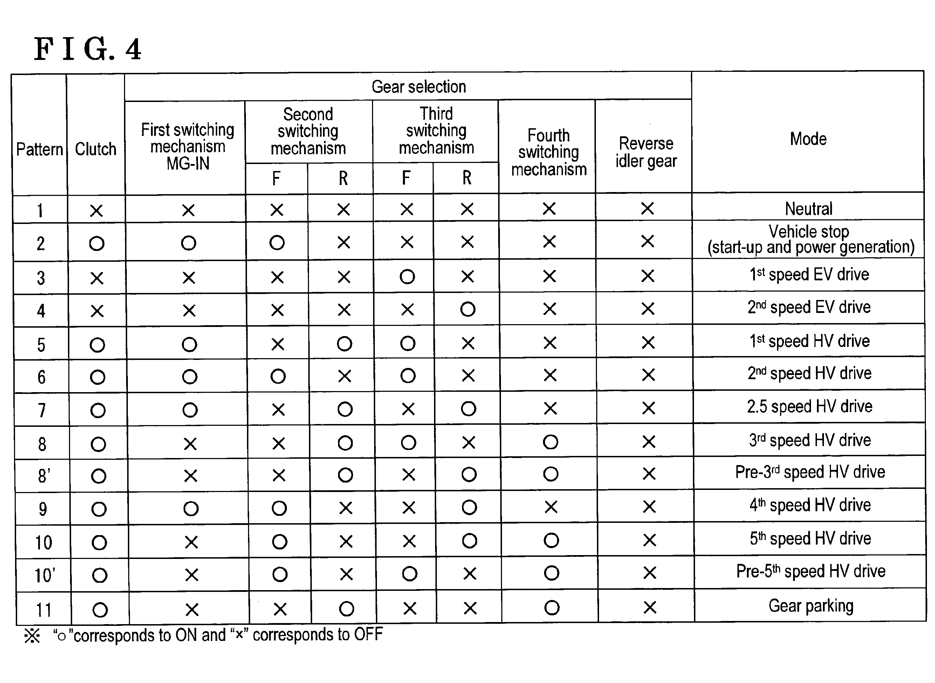

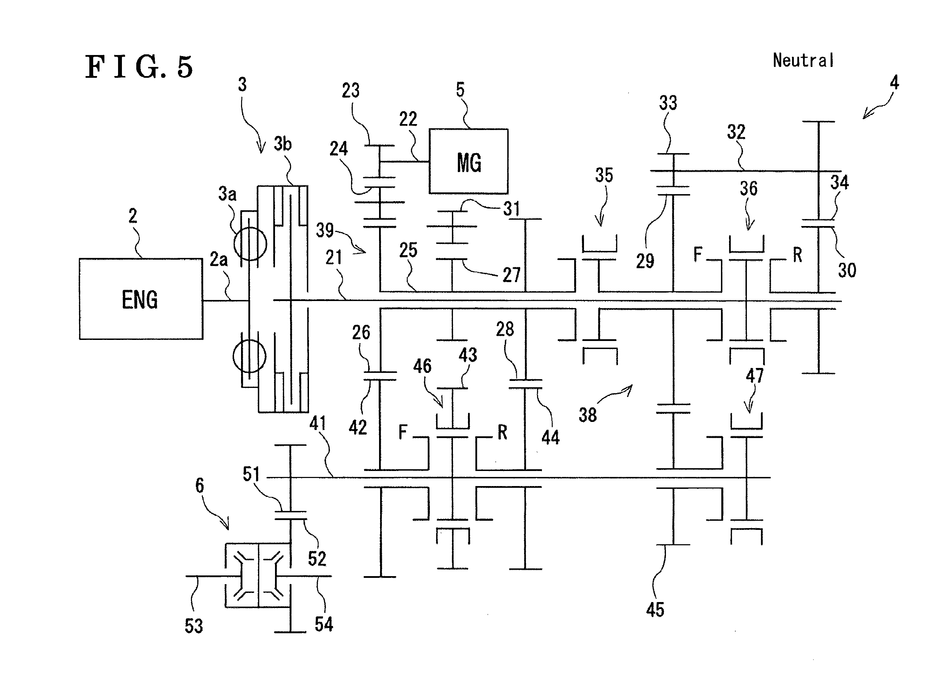

Next, operation states of components (elements) in each operation mode of the drive system 1 will be explained with reference to Figs. 4 to 8. A neutral mode of the drive system 1 is established, as illustrated in Figs. 4 and 5, by the clutch 3 in the disengaged state, i.e., in OFF state, the first switching mechanism 35 in the disconnected state, i.e., in OFF state, each of the second switching mechanism 36 and the third switching mechanism 46 in the neutral position, the fourth switching mechanism 47 in the disconnected state, i.e., in OFF state, and the reverse idler gear 31 in OFF state. The power transmission is inhibited between the engine 2 and the differential apparatus 6 and between the motor generator 5 and the differential apparatus 6.

A vehicle stop mode of the drive system 1 corresponding to a start-up mode in which the engine 2 is started by the rotation power of the motor generator 5 and a power generation mode in which the power generation of the motor generator 5 is performed by the rotation power of the engine 2, is established, as illustrated in Fig. 4, by the clutch 3 in the engaged state, i.e., in ON state, the first switching mechanism 35 in the connected state, i.e., in ON state, the second switching mechanism 36 in the connected state in the direction F, the third switching mechanism 46 in the neutral state, the fourth switching mechanism 47 in OFF state, and the reverse idler gear 31 in OFF state. The power transmission passage is formed between the engine 2 and the motor generator 5 through the crankshaft 2a, the clutch 3, the input shaft 21, the second switching mechanism 36, the fourth driving gear 29, the first switching mechanism 35, the shaft 25, the first driving gear 26, the input idler gear 24, the input driving gear 23, and the input shaft 22. The power transmission passage is inhibited from being formed between the engine 2 and the differential apparatus 6 and between the motor generator 5 and the differential apparatus 6. In the aforementioned state, the motor generator 5 is rotated when the engine 2 is stopped so as to start the engine 2. In a case where the engine 2 is rotated, the power generation is obtainable by the motor generator 5.

A first speed electric vehicle (EV) drive mode of the drive system 1 is established, as illustrated in Fig. 4, by the clutch 3 in OFF state, the first switching mechanism 35 in OFF state, the second switching mechanism 36 in the neutral position, the third switching mechanism 46 in ON state in the direction F, the fourth switching mechanism 47 in OFF state, and the reverse idler gear 31 in OFF state. The power transmission passage is formed between the motor generator 5 and the differential apparatus 6 through the input shaft 22, the input driving gear 23, the input idler gear 24, the first driving gear 26, the first driven gear 42, the third switching mechanism 46, and the output shaft 41. The power generation passage is formed neither between the engine 2 and the motor generator 5 nor between the engine 2 and the differential apparatus 6. As a result, driving and regeneration are achievable by the motor generator 5. Because the first switching mechanism 35 is in OFF state, the engine drive gear train 38 is inhibited from rotating, which leads to a reduction of the number of meshed gears and inertial weight. The EV drive mode corresponds to a mode in which the vehicle is driven in a state where the motor generator 5 only is configured to be driven.

A second speed EV drive mode of the drive system 1 is established, as illustrated in Fig. 4, by the clutch 3 in OFF state, the first switching mechanism 35 in OFF state, the second switching mechanism 36 in the neutral position, the third switching mechanism 46 in ON state in the direction R, the fourth switching mechanism 47 in OFF state, and the reverse idler gear 31 in OFF state. The power transmission passage is formed between the motor generator 5 and the differential apparatus 6 through the input shaft 22, the input driving gear 23, the input idler gear 24, the first driving gear 26, the shaft 25, the third driving gear 28, the third driven gear 44, the third switching mechanism 46, and the output shaft 41. The power transmission passage is formed neither between the engine 2 and the motor generator 5 nor between the engine 2 and the differential apparatus 6. As a result, driving and regeneration are achievable by the motor generator 5. Because the first switching mechanism 35 is in OFF state, the engine drive gear train 38 is inhibited from rotating, which leads to a reduction of the number of meshed gears and inertial weight.

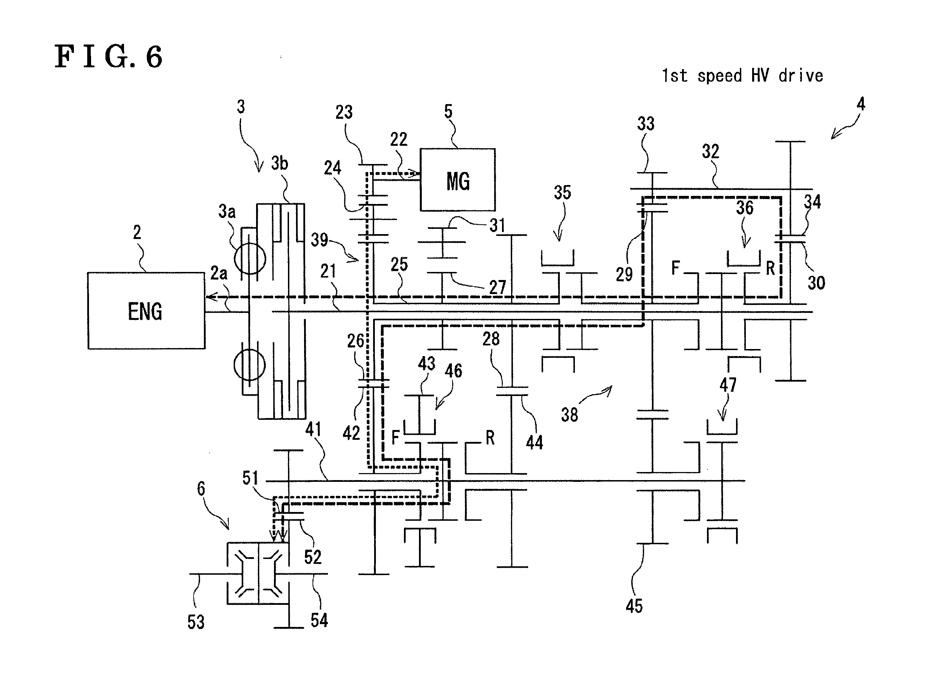

A first speed hybrid vehicle (HV) drive mode of the drive system 1 is established, as illustrated in Figs. 4 and 6, by the clutch 3 in ON state, the first switching mechanism 35 in ON state, the second switching mechanism 36 in ON state in the direction R, the third switching mechanism 46 in ON state in the direction F, the fourth switching mechanism 47 in OFF state, and the reverse idler gear 31 in OFF state. The power transmission passage is formed between the engine 2 and the differential apparatus 6 through the crankshaft 2a, the clutch 3, the input shaft 21, the second switching mechanism 36, the fifth driving gear 30, the second idler gear 34, the shaft 32, the first idler gear 33, the fourth driving gear 29, the first switching mechanism 35, the shaft 25, the first driving gear 26, the first driven gear 42, the third switching mechanism 46, and the output shaft 41. In addition, the power transmission passage is formed between the motor generator 5 and the differential apparatus 6 through the input shaft 22, the input driving gear 23, the input idler gear 24, the first driving gear 26, the first driven gear 42, the third switching mechanism 46, and the output shaft 41. Accordingly, driving and engine brake are achievable by the engine 2 while driving and regeneration are achievable by the motor generator 5. In the first speed HV drive mode, the EV drive gear train 39 is used, in addition to the engine drive gear train 38, between the engine 2 and the differential apparatus 6 by the connection of the fourth driving gear 29 to the shaft 25 by the first switching mechanism 35. The HV drive mode corresponds to a mode in which the vehicle is driven in a state where the engine 2 and the motor generator 5 are both configured to be driven.

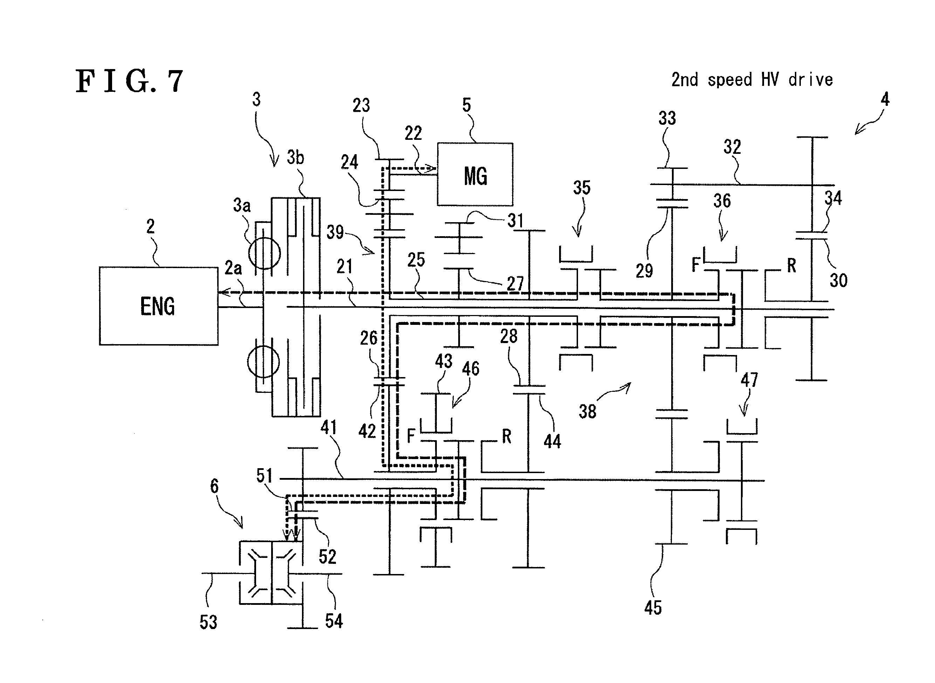

A second speed HV drive mode of the drive system 1 is established, as illustrated in Figs. 4 and 7, by the clutch 3 in ON state, the first switching mechanism 35 in ON state, the second switching mechanism 36 in ON state in the direction F, the third switching mechanism 46 in ON state in the direction F, the fourth switching mechanism 47 in OFF state, and the reverse idler gear 31 in OFF state. The power transmission passage is formed between the engine 2 and the differential apparatus 6 through the crankshaft 2a, the clutch 3, the input shaft 21, the second switching mechanism 36, the fourth driving gear 29, the first switching mechanism 35, the shaft 25, the first driving gear 26, the first driven gear 42, the third switching mechanism 46, and the output shaft 41. In addition, the power transmission passage is formed between the motor generator 5 and the differential apparatus 6 through the input shaft 22, the input driving gear 23, the input idler gear 24, the first driving gear 26, the first driven gear 42, the third switching mechanism 46, and the output shaft 41. Accordingly, driving and engine brake are achievable by the engine 2 while driving and regeneration are achievable by the motor generator 5. In the shifting between the first speed HV drive mode and the second speed HV drive mode, the power transmission passage between the motor generator 5 and the differential apparatus 6 is unchanged, which inhibits generation of torque interruption. In the second speed HV drive mode, the EV drive gear train 39 is used, in addition to the engine drive gear train 38, between the engine 2 and the differential apparatus 6 by the connection of the fourth driving gear 29 to the shaft 25 by the first switching mechanism 35.

A 2.5 speed HV drive mode of the drive system 1 is established, as illustrated in Fig. 4, by the clutch 3 in ON state, the first switching mechanism 35 in ON state, the second switching mechanism 36 in ON state in the direction R, the third switching mechanism 46 in ON state in the direction R, the fourth switching mechanism 47 in OFF state, and the reverse idler gear 31 in OFF state. The power transmission passage is formed between the engine 2 and the differential apparatus 6 through the crankshaft 2a, the clutch 3, the input shaft 21, the second switching mechanism 36, the fifth driving gear 30, the second idler gear 34, the shaft 32, the first idler gear 33, the fourth driving gear 29, the first switching mechanism 35, the shaft 25, the third driving gear 28, the third driven gear 44, the third switching mechanism 46, and the output shaft 41. In addition, the power transmission passage is formed between the motor generator 5 and the differential apparatus 6 through the input shaft 22, the input driving gear 23, the input idler gear 24, the first driving gear 26, the shaft 25, the third driving gear 28, the third driven gear 44, the third switching mechanism 46, and the output shaft 41. Accordingly, driving and engine brake are achievable by the engine 2 while driving and regeneration are achievable by the motor generator 5. In the 2.5 speed HV drive mode, the EV drive gear train 39 is used, in addition to the engine drive gear train 38, between the engine 2 and the differential apparatus 6 by the connection of the fourth driving gear 29 to the shaft 25 by the first switching mechanism 35. The 2.5 speed HV drive mode may be omitted.

A third speed HV drive mode of the drive system 1 is established, as illustrated in Fig. 4, by the clutch 3 in ON state, the first switching mechanism 35 in OFF state, the second switching mechanism 36 in ON state in the direction R, the third switching mechanism 46 in ON state in the direction F, the fourth switching mechanism 47 in ON state, and the reverse idler gear 31 in OFF state. The power transmission passage is formed between the engine 2 and the differential apparatus 6 through the crankshaft 2a, the clutch 3, the input shaft 21, the second switching mechanism 36, the fifth driving gear 30, the second idler gear 34, the shaft 32, the first idler gear 33, the fourth driving gear 29, the fourth driven gear 45, the fourth switching mechanism 47, and the output shaft 41. In addition, the power transmission passage is formed between the motor generator 5 and the differential apparatus 6 through the input shaft 22, the input driving gear 23, the input idler gear 24, the first driving gear 26, the first driven gear 42, the third switching mechanism 46, and the output shaft 41. Accordingly, driving and engine brake are achievable by the engine 2 while driving and regeneration are achievable by the motor generator 5. In the shifting between the second speed HV drive mode and the third speed HV drive mode, the power transmission passage between the motor generator 5 and the differential apparatus 6 is unchanged, which inhibits generation of torque interruption. In the third speed HV drive mode, the engine drive gear train 38 is independently operated from the EV drive gear train 39.

A pre-third speed HV drive mode of the drive system 1 is established, as illustrated in Fig. 4, by the clutch 3 in ON state, the first switching mechanism 35 in OFF state, the second switching mechanism 36 in ON state in the direction R, the third switching mechanism 46 in ON state in the direction R, the fourth switching mechanism 47 in ON state, and the reverse idler gear 31 in OFF state. The power transmission passage is formed between the engine 2 and the differential apparatus 6 through the crankshaft 2a, the clutch 3, the input shaft 21, the second switching mechanism 36, the fifth driving gear 30, the second idler gear 34, the shaft 32, the first idler gear 33, the fourth driving gear 29, the fourth driven gear 45, the fourth switching mechanism 47, and the output shaft 41. In addition, the power transmission passage is formed between the motor generator 5 and the differential apparatus 6 through the input shaft 22, the input driving gear 23, the input idler gear 24, the first driving gear 26, the shaft 25, the third driving gear 28, the third driven gear 44, the third switching mechanism 46, and the output shaft 41. Accordingly, driving and engine brake are achievable by the engine 2 while driving and regeneration are achievable by the motor generator 5. In the shifting between the third speed HV drive mode and the pre-third speed HV drive mode, the power transmission passage between the engine 2 and the differential apparatus 6 is unchanged, which inhibits generation of torque interruption. In the pre-third speed HV drive mode, the engine drive gear train 38 is independently operated from the EV drive gear train 39.

A fourth speed HV drive mode of the drive system 1 is established, as illustrated in Fig. 4, by the clutch 3 in ON state, the first switching mechanism 35 in ON state, the second switching mechanism 36 in ON state in the direction F, the third switching mechanism 46 in ON state in the direction R, the fourth switching mechanism 47 in OFF state, and the reverse idler gear in OFF state. The power transmission passage is formed between the engine 2 and the differential apparatus 6 through the crankshaft 2a, the clutch 3, the input shaft 21, the second switching mechanism 36, the fourth driving gear 29, the first switching mechanism 35, the shaft 25, the third driving gear 28, the third driven gear 44, the third switching mechanism 46, and the output shaft 41. In addition, the power transmission passage is formed between the motor generator 5 and the differential apparatus 6 through the input shaft 22, the input driving gear 23, the input idler gear 24, the first driving gear 26, the shaft 25, the third driving gear 28, the third driven gear 44, the third switching mechanism 46, and the output shaft 41. Accordingly, driving and engine brake are achievable by the engine 2 while driving and regeneration are achievable by the motor generator 5. In the shifting between the pre-third speed HV drive mode and the fourth speed HV speed mode, the power transmission passage between the motor generator 5 and the differential apparatus 6 is unchanged, which inhibits generation of torque interruption. Further, because the shifting between the third speed HV drive mode and the fourth speed HV drive mode is achieved via the pre-third speed HV drive mode, generation of torque interruption may be inhibited in the shifting between the third speed HV drive mode and the fourth speed HV drive mode. In the fourth speed HV drive mode, the EV drive gear train 39 is used, in addition to the engine drive gear train 38, between the engine 2 and the differential apparatus 6 by the connection of the fourth driving gear 29 to the shaft 25 by the first switching mechanism 35.

A fifth speed HV drive mode of the drive system 1 is established, as illustrated in Fig. 4, by the clutch 3 in ON state, the first switching mechanism 35 in OFF state, the second switching mechanism 36 in ON state in the direction F, the third switching mechanism 46 in ON state in the direction R, the fourth switching mechanism 47 in ON state, and the reverse idler gear 31 in OFF state. The power transmission passage is formed between the engine 2 and the differential apparatus 6 through the crankshaft 2a, the clutch 3, the input shaft 21, the second switching mechanism 36, the fourth driving gear 29, the fourth driven gear 45, the fourth switching mechanism 47, and the output shaft 41. In addition, the power transmission passage is formed between the motor generator 5 and the differential apparatus 6 through the input shaft 22, the input driving gear 23, the input idler gear 24, the first driving gear 26, the shaft 25, the third driving gear 28, the third driven gear 44, the third switching mechanism 46, and the output shaft 41. Accordingly, driving and engine brake are achievable by the engine 2 while driving and regeneration are achievable by the motor generator 5. In the shifting between the fourth speed HV drive mode and the fifth speed HV drive mode, the power transmission passage between the motor generator 5 and the differential apparatus 6 is unchanged, which inhibits generation of torque interruption. In the fifth speed HV drive mode, the engine drive gear train 38 is independently operated from the EV drive gear train 39.

A pre-fifth speed HV drive mode of the drive system 1 is established, as illustrated in Fig. 4, by the clutch 3 in ON state, the first switching mechanism 35 in OFF state, the second switching mechanism 36 in ON state in the direction F, the third switching mechanism 46 in ON state in the direction F, the fourth switching mechanism 47 in ON state, and the reverse idler gear 31 in OFF state. The power transmission passage is formed between the engine 2 and the differential apparatus 6 through the crankshaft 2a, the clutch 3, the input shaft 21, the second switching mechanism 36, the fourth driving gear 29, the fourth driven gear 45, the fourth switching mechanism 47, and the output shaft 41. In addition, the power transmission passage is formed between the motor generator 5 and the differential apparatus 6 through the input shaft 22, the input driving gear 23, the input idler gear 24, the first driving gear 26, the first driven gear 42, the third switching mechanism 46, and the output shaft 41. Accordingly, driving and engine brake are achievable by the engine 2 while driving and regeneration are achievable by the motor generator 5. In the shifting between the fifth speed HV drive mode and the pre-fifth speed HV drive mode, the power transmission passage between the engine 2 and the differential apparatus 6 is unchanged, which inhibits generation of torque interruption. In the pre-fifth speed HV drive mode, the engine drive gear train 38 is independently operated from the EV drive gear train 39.

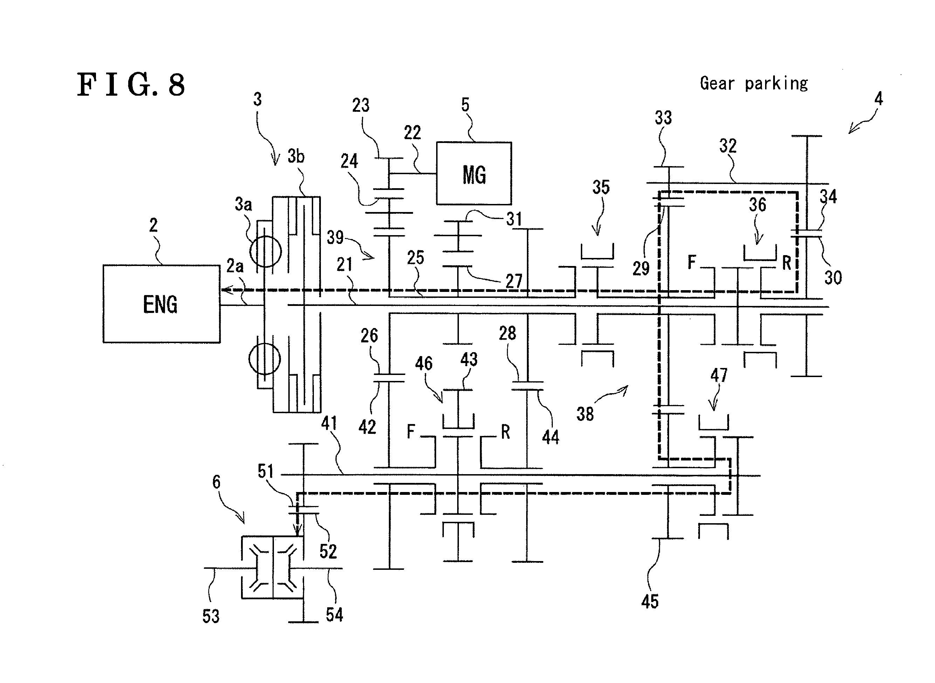

A gear parking mode of the drive system 1 is established, as illustrated in Figs. 4 and 8, by the clutch 3 in ON state, the first switching mechanism 35 in OFF state, the second switching mechanism 36 in ON state in the direction R, the third switching mechanism 46 in the neutral state, the fourth switching mechanism 47 in ON state, and the reverse idler gear 31 in OFF state. The power transmission passage is formed between the engine 2 and the differential apparatus 6 through the crankshaft 2a, the clutch 3, the input shaft 21, the second switching mechanism 36, the fifth driving gear 30, the second idler gear 34, the shaft 32, the first idler gear 33, the fourth driving gear 29, the fourth driven gear 45, the fourth switching mechanism 47, and the output shaft 41. The power transmission passage is inhibited from being formed between the motor generator 5 and the differential apparatus 6. Further, the EV drive gear train 39 is shut off from the engine drive gear train 38 by means of the first switching mechanism 35. Accordingly, the engine 2 may perform the engine brake to stop the movement of the vehicle in the parked state. Details of the aforementioned drive modes of the transmission 4 except for the gear parking mode are described in JP2012-247018A.

Next, a control method of the transmission control unit 13 in the shifting from each of the neutral mode, the first speed HV drive mode, and the second speed HV drive mode to the gear parking mode will be explained. During the control, the transmission control unit 13 detects the states of the clutch 3 and the switching mechanisms 35, 36, 46, and 47 by the hydraulic sensor of the clutch actuator 19 and the switching position sensors of the switching mechanisms 35, 36, 46, and 47.

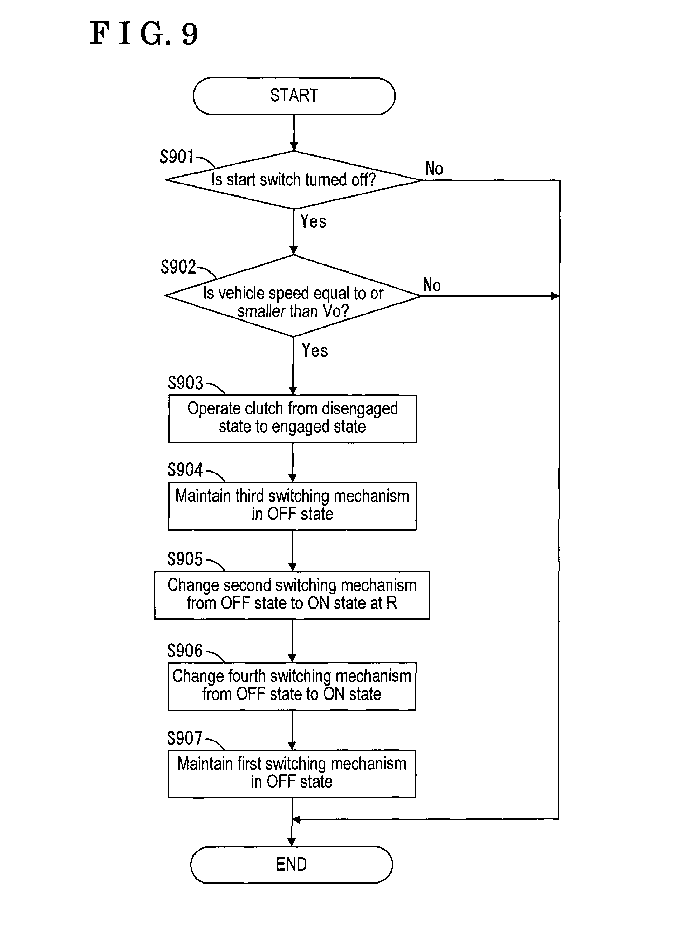

A shifting control from the neutral mode to the gear parking mode will be explained with reference to a flowchart in Fig. 9. In a case where the transmission control unit 13 detects that the vehicle start switch 18 is turned off in step S901 (hereinafter, "step" will be omitted), it is determined that a vehicle driver intends to park the vehicle. Then, the transmission control unit 13 determines whether or not the vehicle speed is equal to or smaller than Vo in S902. The value Vo corresponds to the vehicle speed extremely closer to 0 km/h. For example, the value Vo is specified to be several km/h. Even in a case where the vehicle start switch 18 is turned off, power sources of the transmission control unit 13 and the gear shift actuator 37, and a hydraulic power source of the clutch actuator 19, for example, are inhibited from being turned off and are turned off after the present shifting control is completed. The aforementioned condition related to the power source is also applied to a shifting control from each of the first speed HV drive mode and the second speed HV drive mode to the gear parking mode which will be explained later.

In a case where it is determined that the vehicle speed is equal to or smaller than Vo, the clutch 3 is operated from the disengaged state to the engaged state in S903 corresponding to an engine connection means. Then, the OFF state (neutral state) of the third switching mechanism 46 is maintained in S904 corresponding to a motor separation means. The second switching mechanism 36 is then shifted from the OFF state (neutral state) to the ON state in the direction R in S905 corresponding to the engine connection means. The fourth switching mechanism 47 is thereafter shifted from the OFF state to the ON state in S906 corresponding to the engine connection means. As the last step, the OFF state of the first switching mechanism 35 is maintained in S907 corresponding to a gear train separation means.

The positions of the first switching mechanism 35, the second switching mechanism 36, the third switching mechanism 46, and the fourth switching mechanism 47 are mechanically locked. After the power source of the transmission control unit 13, for example, is turned off, the positions of the first switching mechanism 35, the second switching mechanism 36, the third switching mechanism 46, and the fourth switching mechanism 47 are maintained while the vehicle is being parked. The aforementioned condition related to the positions of the switching mechanisms 35, 36, 46 and 47 is also applied to the shifting control from each of the first speed HV drive mode and the second speed HV drive mode to the gear parking mode. In a case where it is not determined that the vehicle start switch 18 is turned off in S901 or it is determined that the vehicle speed is greater than Vo in S902, the shifting control from the neutral mode to the gear parking mode is terminated. In the flowchart illustrated in Fig. 9, processes from S903 to S907 are interchangeable in an appropriate order.

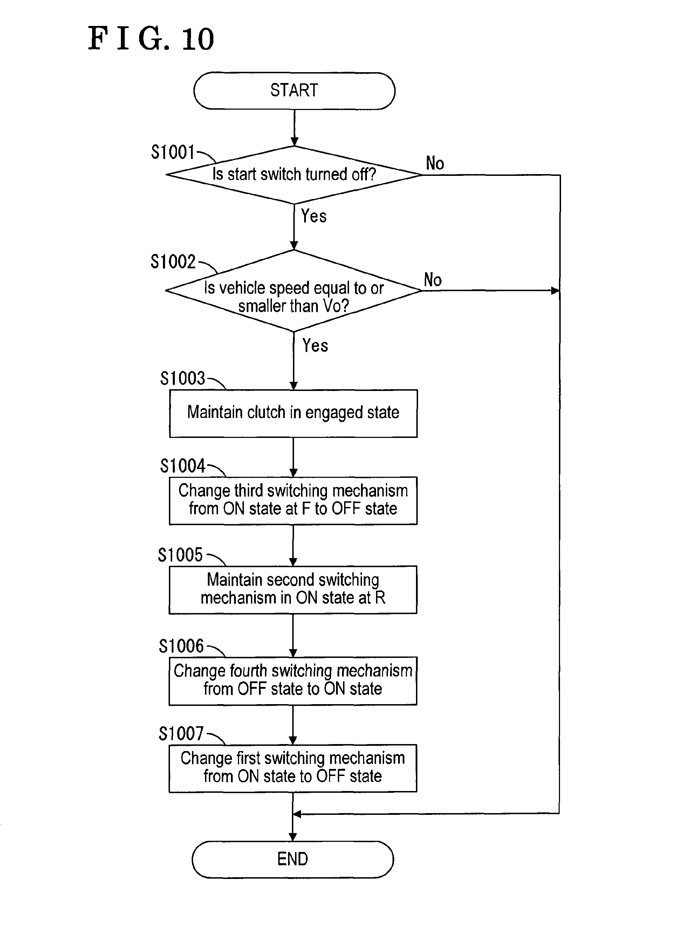

The shifting control from the first speed HV drive mode to the gear parking mode will be explained with reference to a flowchart in Fig. 10. In a case where the transmission control unit 13 detects that the vehicle start switch 18 is turned off in step S1001, it is determined that the vehicle driver intends to park the vehicle. Then, the transmission control unit 13 determines whether or not the vehicle speed is equal to or smaller than Vo in S1002. In a case where it is determined that the vehicle speed is equal to or smaller than Vo, the engagement state of the clutch 3 is maintained in S1003 corresponding to the engine connection means. Next, the third switching mechanism 46 is shifted from the ON state in the direction F to the OFF state in S1004 corresponding to the motor separation means. The ON state of the second switching mechanism 36 in the direction R is then maintained in S1005 corresponding to the engine connection means.

Next, the fourth switching mechanism 47 is shifted to the ON state from the OFF state in S1006 corresponding to the engine connection means. As the last step, the first switching mechanism 35 is shifted to the OFF state from the ON state in S1007 corresponding to the gear train separation means. In a case where it is not determined that the vehicle start switch 18 is turned off in S1001 or it is determined that the vehicle speed is greater than Vo in S1002, the shifting control from the first speed HV drive mode to the gear parking mode is terminated. In the flowchart illustrated in Fig. 10, processes from S1003 to S1007 are interchangeable in an appropriate order.

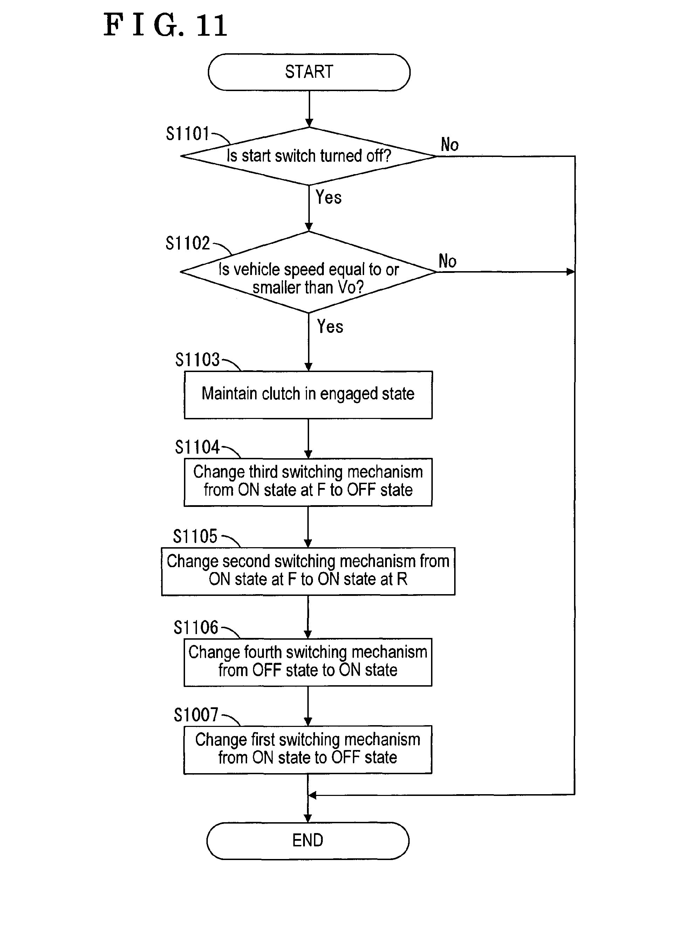

The shifting control from the second speed HV drive mode to the gear parking mode will be explained with reference to a flowchart in Fig. 11. In a case where the transmission control unit 13 detects that the vehicle start switch 18 is turned off in step S1101, it is determined that the vehicle driver intends to park the vehicle. Then, the transmission control unit 13 determines whether or not the vehicle speed is equal to or smaller than Vo in S1102. In a case where it is determined that the vehicle speed is equal to or smaller than Vo, the engagement state of the clutch 3 is maintained in S1103 corresponding to the engine connection means. Next, the third switching mechanism 46 is shifted from the ON state in the direction F to the OFF state in S1104 corresponding to the motor separation means. The second switching mechanism 36 is then shifted from the ON state in the direction F to the ON state in the direction R in S1105 corresponding to the engine connection means.

Next, the fourth switching mechanism 47 is shifted from the OFF state to the ON state in S1106 corresponding to the engine connection means. As the last step, the first switching mechanism 35 is shifted from the ON state to the OFF state in S1107 corresponding to the gear train separation means. In a case where it is not determined that the vehicle start switch 18 is turned off in S1101 or it is determined that the vehicle speed is greater than Vo in S1102, the shifting control from the second speed HV drive mode to the gear parking mode is terminated. In the flowchart illustrated in Fig. 11, processes from S1103 to S1107 are interchangeable in an appropriate order.

According to the present embodiment, in a case where it is detected that the vehicle driver intends to park the vehicle by the operation of the vehicle start switch 18, the transmission control unit 13 connects between the engine 2 and the wheels 7 and 8 by the engine drive gear train 38 so as to inhibit the movement of the vehicle by the engine 2 functioning as a resistance. In addition, the transmission control unit 13 disconnects between the motor generator 5 and the wheels 7 and 8 by the EV drive gear train 39 and disconnects the EV drive gear train 39 from the engine drive gear train 38 by the first switching mechanism 35. Therefore, even in a case where an excessive rotation force is generated at each of the wheels 7 and 8, a rotor of the motor generator 5 is inhibited from rotating, which results in the reduction of burden to the inverter 10. Further, a mechanical parking structure other than the engine 2 and the motor generator 5 is not necessary, which leads to a vehicle including a small size and manufactured at a reduced cost.

In addition, in a case where the parked state of the vehicle is detected by the vehicle start switch 18, the transmission control unit 13 controls the fifth driving gear 30 to engage with the input shaft 21 so as to connect between the engine 2 and the wheels 7 and 8 via the deceleration mechanism formed by the first idler gear 33 and the fourth driving gear 29. As a result, the vehicle parking apparatus is obtained, so as to make the vehicle difficult to move even in a case where the rotation force is generated at the wheels 7 and 8.

Further, in the present embodiment, the clutch 3 is formed by the normally closed clutch configured to connect between the engine 2 and the engine drive gear train 38 in a case where the oil pressure from the clutch actuator 19 is released. Thus, a specific configuration for holding the oil pressure applied to the clutch 3 in the parked state of the vehicle is not necessary, which leads to a vehicle including a small size and manufactured at a reduced cost.

Furthermore, in the present embodiment, the vehicle start switch 18 serves as the parking detection member. In a case where the vehicle start switch 18 is turned off, the parked state of the vehicle is detected. Therefore, a specific device is not necessary for detecting whether or not the vehicle driver intends to park the vehicle, which leads to the vehicle parking apparatus including a small size and manufactured at a reduced cost.

Furthermore, the present embodiment includes the engine connection means connecting between the engine 2 and the wheels 7 and 8 by the engine drive gear train 38, the motor separation means disconnecting between the motor generator 5 and the wheels 7 and 8 by the EV drive gear train 39, and the gear train separation means disconnecting the EV drive gear train 39 from the engine drive gear train 38 by the first switching mechanism 35. Thus, even in a case where an excessive rotation force is generated at each of the wheels 7 and 8, the rotor of the motor generator 5 is inhibited from rotating, which results in a method for parking a vehicle that reduces a burden to the inverter 10. A mechanical parking structure other than the engine 2 and the motor generator 5, for example, is not necessary, which leads to the method at a reduced cost.

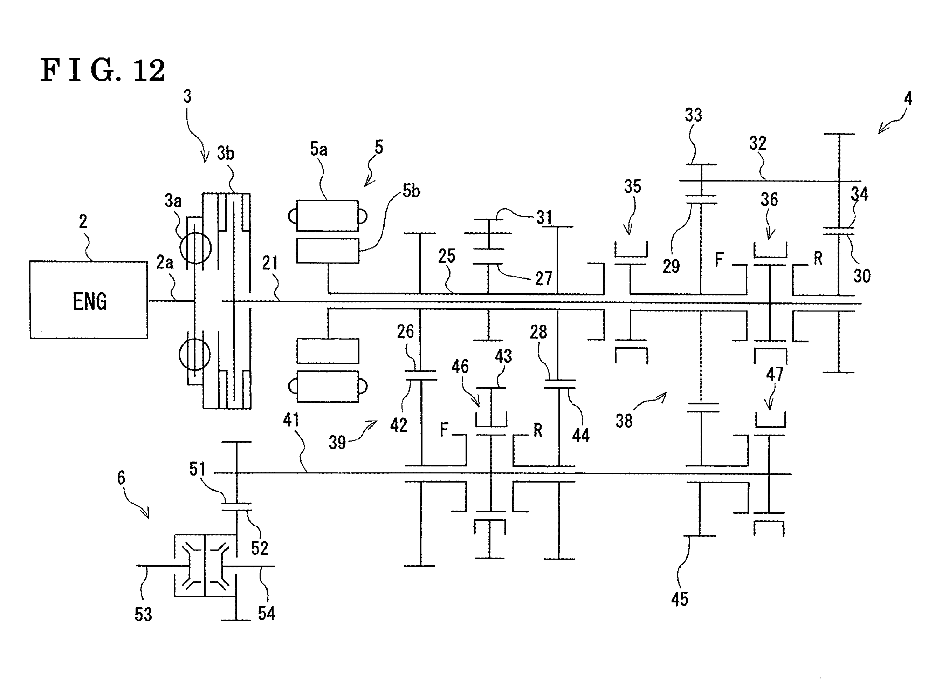

A second embodiment will be explained with reference to Figs. 12 to 14. The second embodiment is a modified embodiment of the first embodiment. In the second embodiment, as a means for transmitting the rotation power of the motor generator 5 to the shaft 25, a rotor 5b of the motor generator 5 is directly connected to the shaft 25, instead of the input shaft 22, the input driving gear 23, and the input idler gear 24 as in the first embodiment. The motor generator 5 in which the rotor 5b rotates at an inner side of a stator 5a is arranged between the clutch 3 and the first driving gear 26. The stator 5a is fixed to the housing of the transmission 4. The rotor 5b integrally rotates with the shaft 25 at the inner side of the stator 5a.

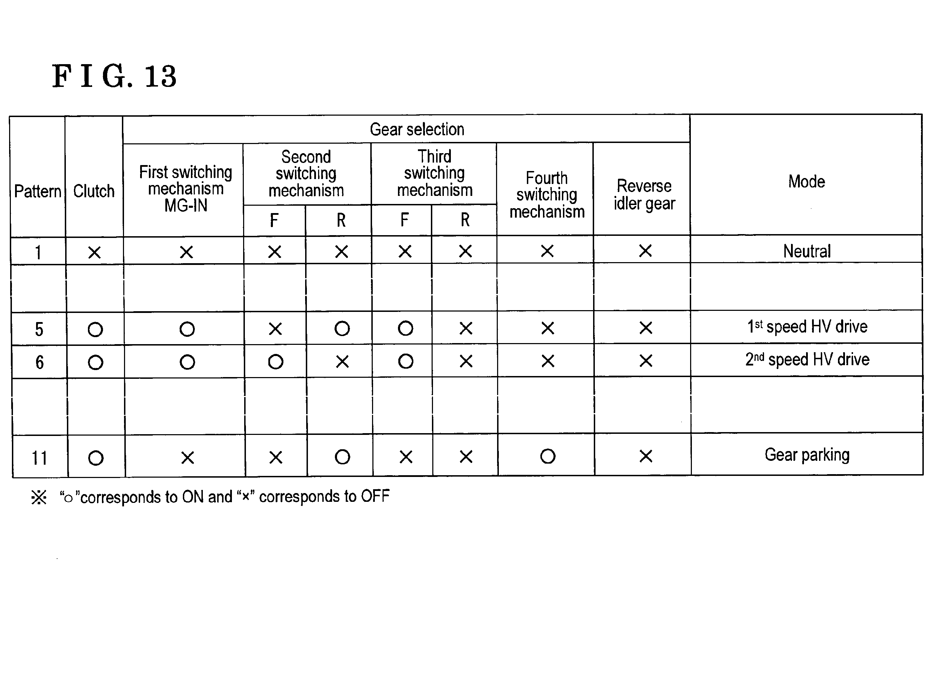

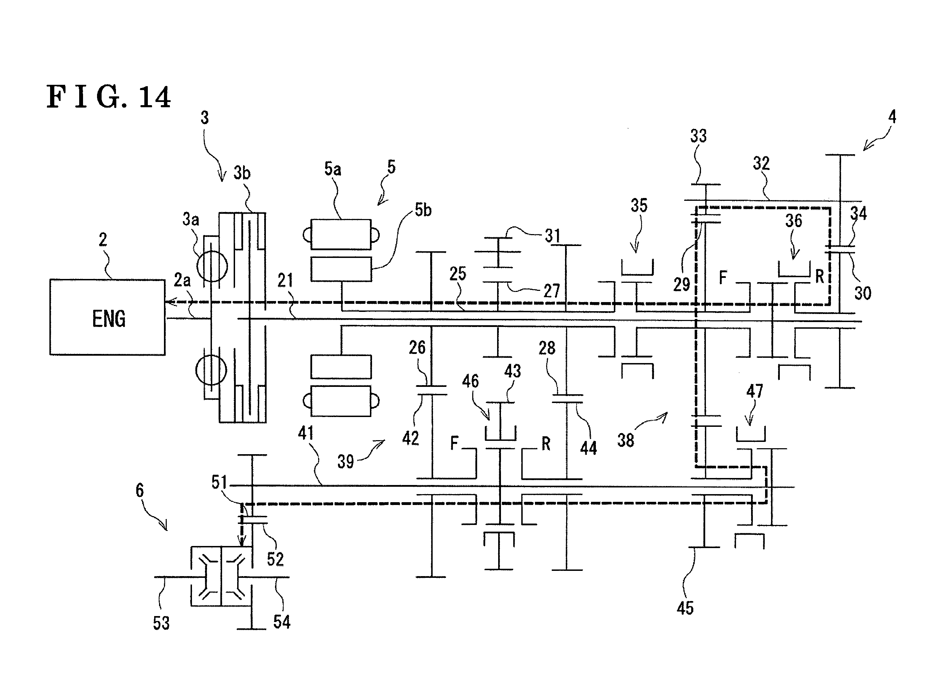

As illustrated in Fig. 13, operation states of the components (elements) in each of the operation modes of the drive system 1 according to the second embodiment are substantially the same as those of the first embodiment. In addition, as illustrated in Fig. 14, the power transmission passage between the engine 2 and the differential apparatus 6 in the gear parking mode of the vehicle parking apparatus of the second embodiment is the same as that of the first embodiment. In the vehicle parking apparatus of the second embodiment, other configurations, the operations in each of the operation modes, and the shifting control between the operation modes are substantially the same as those of the first embodiment and thus detailed explanations will be omitted. The vehicle parking apparatus according to the second embodiment exercises substantially the same effects or advantages as those of the first embodiment.

The aforementioned embodiments may be appropriately modified or changed as below. The shifting control to the gear parking mode may be possible from the vehicle stop mode (the start-up mode and the power generation mode), the first speed EV drive mode, or the second speed EV drive mode, for example. Each of the first switching mechanism 35, the second switching mechanism 36, the third switching mechanism 46, and the fourth switching mechanism 47 may be formed by a switching mechanism including a synchronizer or may be formed by a dog clutch not including the synchronizer. In a case where an operation lever, for example, provided at a vehicle interior is operated, the parked state of the vehicle may be detected. The number of teeth formed at the outer peripheral surface of the fifth driving gear 30 may be smaller than the number of teeth formed at the outer peripheral surface of the second idler gear 34. Then, the deceleration mechanism may be formed by the fifth driving gear 30 and the second idler gear 34.

The aforementioned embodiment may be appropriately modified or changed within a scope of all disclosures including drawings, for example.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A vehicle parking apparatus comprising:
an engine (2);
an electric motor (5);
a transmission apparatus (4) configured to change a speed of a rotation power transmitted from the engine (2) and the electric motor (5) to transmit the rotation power to a driving wheel (7, 8);
a parking detection member (18) detecting a parked state of a vehicle; and
a control unit (13) connected to the parking detection member (18) and controlling an operation of the transmission apparatus (4);
the transmission apparatus (4) including a first gear train (38) being switchable among a plurality of gear positions and being configured to connect between the engine (2) and the driving wheel (7,8), a second gear train (39) being switchable among a plurality of gear positions and being configured to connect between the electric motor (5) and the driving wheel (7,8), and a first switching mechanism (35) selectively connecting and disconnecting between a predetermined first rotation element (29) in the first gear train (38) and a predetermined second rotation element (25) in the second gear train (39),
the control unit (13) connecting between the engine (2) and the driving wheel (7,8) by the first gear train (38), disconnecting between the electric motor (5) and the driving wheel (7,8) by the second gear train (39), and disconnecting the second gear train (39) from the first gear train (38) by the first switching mechanism (35) in a case where the parking detection member (18) detects the parked state of the vehicle.

2. The vehicle parking apparatus according to claim 1, wherein the first gear train (38) includes:
an input shaft (21) connected to the engine (2);
a first input gear (30) being engageable and disengageable relative to the input shaft (21), the first input gear (30) integrally rotating with the input shaft (21) in a state to engage with the input shaft (21);
an output gear (29) being engageable and disengageable relative to the input shaft (21), the output gear (29) integrally rotating with the input shaft (21) and configured to be connected to the driving wheel (7,8) in a state to engage with the input shaft (21);
a deceleration shaft (32) at which a second input gear (34) meshed with the first input gear (30) and a third input gear (33) arranged coaxially to the second input gear (34) and meshed with the output gear (29) are arranged, the number of gear teeth formed at an outer peripheral surface of the first input gear (30) being smaller than the number of gear teeth formed at an outer peripheral surface of the second input gear (34) or the number of gear teeth formed at an outer peripheral surface of the third input gear (33) being smaller than the number of gear teeth formed at an outer peripheral surface of the output gear (29); and
a second switching mechanism (36) controlled by the control unit (13) and configured to selectively engage one of the output gear (29) and the first input gear (30) with the input shaft (21); and wherein
the control unit (13) controls the second switching mechanism (36) to engage the first input gear (30) with the input shaft (21) in a case where the parking detection member (18) detects the parked state of the vehicle.

3. The vehicle parking apparatus according to claim 1 or 2, further comprising a clutch apparatus (3) provided between the engine (2) and the transmission apparatus (4) to receive an operation force by the control unit (13), the clutch apparatus (3) selectively connecting and disconnecting between the engine (2) and the transmission apparatus (4), the clutch apparatus (3) connecting between the engine (2) and the transmission apparatus (4) in a case where the clutch apparatus (3) is inhibited from receiving the operation force.

4. The vehicle parking apparatus according to any one of claims 1 through 3, wherein the parking detection member (18) is a start switch of the vehicle, and the parked state of the vehicle is detected in a case where the start switch (18) is turned off.

5. The vehicle parking apparatus according to any one of claims 1 through 4, further comprising a third switching mechanism (46) connecting the second gear train (39) and the driving wheel (7, 8) to be engageable and disengageable relative to each other, wherein the control unit (13) controls the third switching mechanism (46) to disconnect between the second gear train (39) and the driving wheel (7, 8) in a case where the parking detection member (18) detects the parked state of the vehicle.

6. The vehicle parking apparatus according to any one of claims 1 through 5, further comprising a fourth switching mechanism (47) selectively connecting one of the first gear (30) and the output gear (29) to the input shaft (21), wherein the control unit (13) controls the fourth switching mechanism (47) to connect between the input shaft (21) and the first input gear (30) in a case where the parking detection member (18) detects the parked state of the vehicle.

7. A method for parking a vehicle, the vehicle comprising an engine (2), an electric motor (5), a transmission apparatus (4) configured to change a speed of a rotation power transmitted from the engine (2) and the electric motor (5) to transmit the rotation power to a driving wheel (7, 8), the transmission apparatus (4) including a first gear train (38) being switchable among a plurality of gear positions and being configured to connect between the engine (2) and the driving wheel (7,8), a second gear train (39) being switchable among a plurality of gear positions and being configured to connect between the electric motor (5) and the driving wheel (7,8), and a first switching mechanism (35) selectively connecting and disconnecting between a predetermined first rotation element (29) in the first gear train (38) and a predetermined second rotation element (25) in the second gear train (39), the method comprising:
connecting between the engine (2) and the driving wheel (7,8) by the first gear train (38);
disconnecting between the electric motor (5) and the driving wheel (7,8) by the second gear train (39); and
disconnecting the second gear train (39) from the first gear train (38) by the first switching mechanism (35).
